# EUROPEAN PATENT SPECIFICATION

(11) **EP 0 498 451 B1**
(45) Date of publication and mention of the grant of the patent: **13.07.1994**
(21) Application number: 92102076.4
(22) Date of filing: 07.02.1992
(51) Int. Cl.: B60Q 3/04, G01D 11/28

(54) **Illuminating device for instrument of vehicle**
Beleuchtungseinrichtung für Fahrzeuginstrument
Dispositif d'éclairage pour instrument de véhicule

(30) Priority: 08.02.1991 JP 11128/91 U; 05.07.1991 JP 52046/91 U
(43) Date of publication of application: 12.08.1992
(73) Proprietor: YAZAKI CORPORATION, Minato-ku Tokyo 108 (JP)
(72) Inventor: Muramatsu, Masahiro, Shimada-shi, Shizuoka 427 (JP); Tsuchiya, Satoshi, Shimada-shi, Shizuoka 427 (JP)
(74) Representative: Grünecker, Kinkeldey, Stockmair & Schwanhäusser Anwaltssozietät

(56) References cited:
- EP-A- 0 107 757
- FR-A- 2 280 173
- US-A- 3 040 168
- US-A- 3 302 012
- US-A- 4 991 064

## Description

### BACKGROUND OF THE INVENTION

This invention relates to an illuminating device for an instrument of a vehicle according to the preamble of claim 1. Such a prior art illuminating device for an instrument of a vehicle (US-A-33 02 012) comprises a circular light conducting rod which is mounted around an indicating device. The light conducting rod is provided with two separate reflecting surfaces which are produced by grinding, milling or the like. A longitudinal portion of said rod is cut out to form a cut-out portion, in which at least one bulb is disposed whereby light from said bulb proceeds in the light conducting rod and is reflected by the reflecting surfaces in order to illuminate a display portion of said indicating device. However, as the reflecting surfaces of the light conducting rod are produced by grinding or the like, the manufacturing process of these reflecting surfaces is rather complicated and expensive. In addition, since light reflected by said surfaces is scattered rather diffusely and only a part of the scattered light illuminates the display, this prior art illumination device has reduced efficiency.

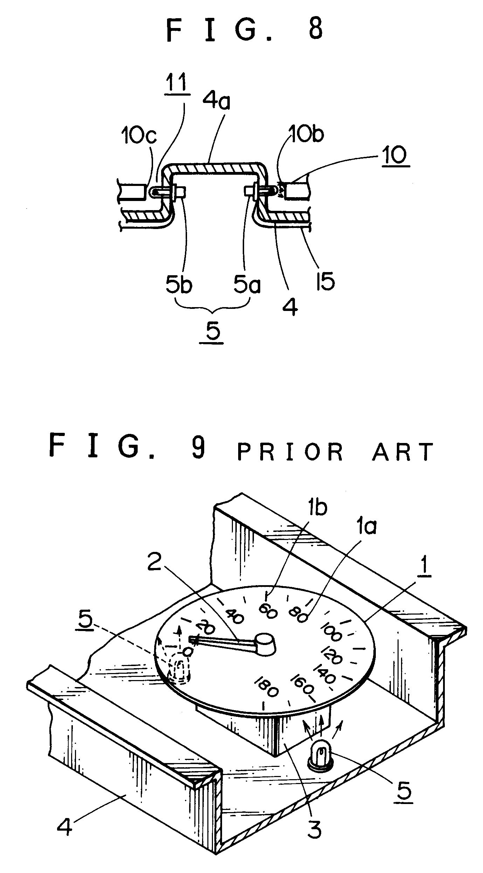

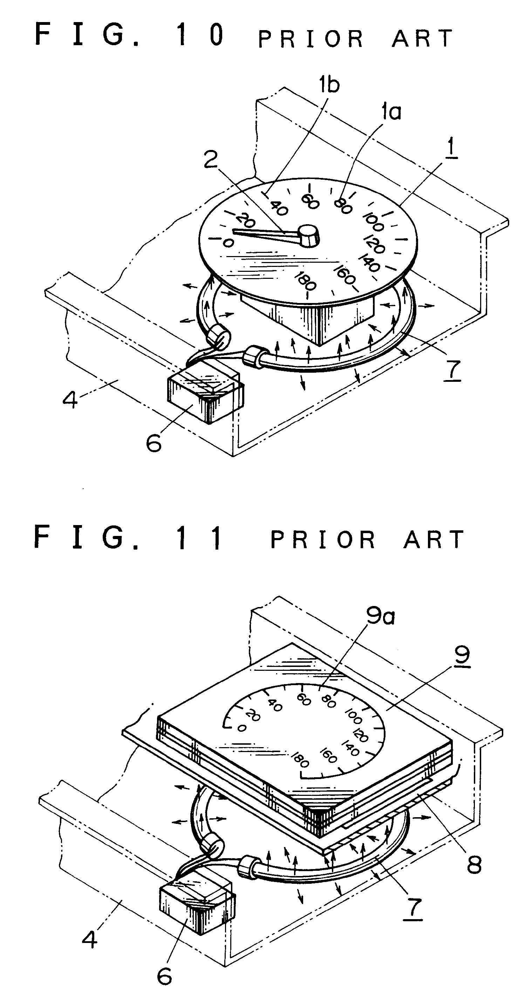

An other illuminating device for an instrument of a vehicle in which a light source is provided behind a display portion displaying vehicle speed or the like and light from the light source transmits the display portion to illuminate the display portion is also known in the technical field of prior art. Figures 9 and 10 show a so-called mechanical or electrical instrument of a vehicle, which comprises a dial 1 with light transmitting letters 1a and graduations 1b, and a pointer 2. Behind the dial 1 is disposed a mechanism 3 which is connected to the pointer 2 and is mechanism 3 which is connected to the pointer 2 and is mechanically or electrically driven to cause the pointer 2 to rotate. Further a plurality of bulbs shown in Fig. 9 are disposed at prescribed intervals at positions corresponding to the letters la and the graduations lb behind the dial 1 in a case 4. A cold cathode-ray tube driven by an inverter 6 shown in Fig. 10 may be mounted in place of the bulbs described above. Light from the light source 5 or 7 transmits the dial 1 to illuminate it.

Figure 11 shows a so-called liquid-crystal-display-type instrument of a vehicle, in which a liquid crystal display panel with a display portion 9a is installed on a substrate 8 and a cold cathode-ray tube driven by the inverter 6 is disposed at a position corresponding to the display portion 9a behind the substrate 8 in the case 4. The cold cathode-ray tube works as a backlight to illuminate the liquid crystal display panel 9.

With the above conventional illuminating device for an instrument of a vehicle, one disadvantage is that imbalance in brightness is apt to occur when illuminated by the plurality of bulbs 5. That is, a portion near the bulb 5 is apt to be bright but a portion far from the bulb 5 becomes dark. When printing treatment is applied to the rear face of the dial or the like to prevent such imbalance in brightness of the illumination, there is a disadvantage that the overall area may become dark.

On the other hand, when illuminated by the cold cathode-ray tube 7 with the inverter 6, it is possible to illuminate the dial 1 uniformly. But, elements such as the inverter 6 or the cold cathode-ray tube are rather expensive and it is necessary to provide structure to prevent noise generated from those elements. As a result, not only the structure of the device becomes complicated but also the price of the whole device becomes high.

It is therefore the object of the present invention to provide an improved illuminating device for an instrument of a vehicle which is able to illuminate the dial with uniform brightness, with considerably simple structure and low cost. This object is achieved by the features of claim 1.

By using a circular light transmitting rod and printing or painting a reflecting film on a boundary surface thereof, light proceeding through said rod is reflected by said reflecting film and is emitted from said rod with uniform directivity by lens effect towards the display portion. Since there is no procedure of grinding of the light transmitting rod and the reflecting film is simply printed or painted onto the rod, the manufacturing process becomes simple and inexpensive. The light transmitting rod itself and the reflecting film provided on a boundary surface thereof provides a lens effect, which results in uniform directivity of the scattered light. Therefore, a higher percentage of the reflected light illuminates the display portion, which increases the efficiency of the illuminating device according to the present invention.

Further embodiments of the invention are indicated in the appended subclaims.

The present invention will be more apparent from the description with reference to the accompanying drawings wherein:
Figure 1A is a perspective view of an illuminating device for an instrument of a vehicle according to an embodiment of the present invention, in which the device is used for a mechanical or electrical instrument of a vehicle;
Figure 1B is a a perspective view of an illuminating device for an instrument of a vehicle according to an embodiment of the present invention, in which the device is used for a liquid-crystal-display-type instrument.
Figure 2 is a view showing an end portion of a light transmitting rod according to the present invention;
Figure 3 is a partially side view of the light transmitting rod of Fig. 2;
Figure 4 is a partially side view of an illuminating device according to another embodiment of the present invention;
Figure 5 is a bottom view of an illuminating device according to another embodiment of the present invention;
Figure 6A is a perspective view of an illuminating device according to another embodiment of the present invention;
Figure 6B is a side cross-sectional view of the illuminating device according to another embodiment of the present invention;
Figure 7 is a perspective view of an illuminating device according to another embodiment of the present invention;
Figure 8 is a partially cross-sectional view showing an illumination bulb mounting portion of Fig. 7;
Figure 9 is a perspective view of a conventional illuminating device for an instrument of a vehicle;
Figure 10 is a perspective view of another conventional illuminating device for an instrument of a vehicle;
Figure 11 is a perspective view of another conventional illuminating device for an instrument of a vehicle.

### DETAILED DESCRIPTION OF PREFERRED EMBODIMENTS

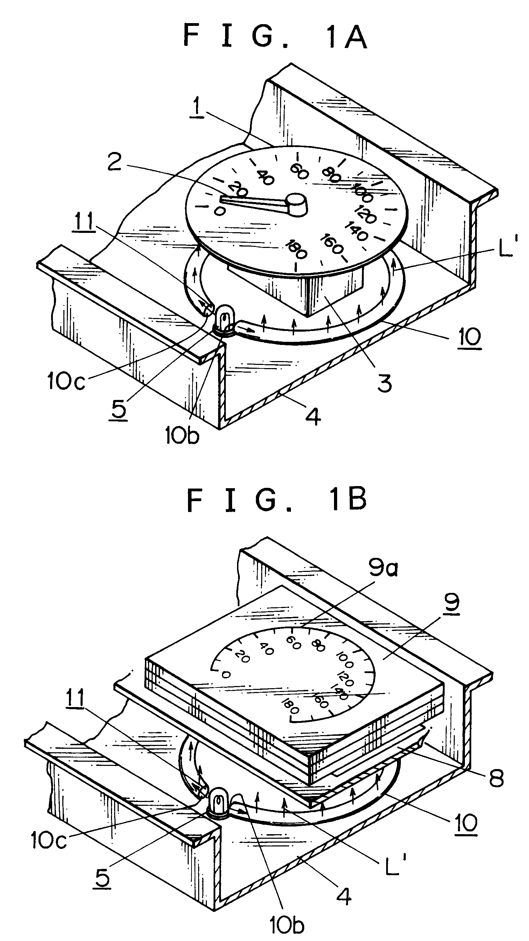

Now, embodiments of the present invention will be explained with reference to Figures 1 to 8.

Figures 1 to 3 show an illuminating device for an instrument of a vehicle according to one embodiment of the present invention. Figure 1A describes so-called mechanical or electrical instrument of a vehicle. In the figure, reference numeral 1 shows a dial constituting a display portion, and 2 a pointer. Behind the dial 1 is installed a mechanism 3 which is mechanically or electrically driven. The rotating force of the mechanism cause the pointer 2 to rotate. Figure 1B illustrates a liquid-crystal-display-type instrument of a vehicle and numeral 8 is a substrate on which a liquid crystal display panel with a display portion 9a is disposed to display desirable information on the display portion 9a according to signals from substrate 8.

In both instruments of a vehicle described above, a light transmitting rod 10, which is made of silica glass, acrylic resin, or the like and has a shape of circle with a portion thereof being cut out, is disposed at a position corresponding to letters 1a or graduations 1b of the dial 1 as display portion, or the display portion 9a of the liquid crystal display panel 9 behind the dial 1 or the liquid crystal display panel 9 in a case 4. An illumination bulb 5 is introduced from the rear surface of the case 4 and is positioned at the cutout portion 11 where a longitudinal portion of the light transmitting rod 10 is cut out.

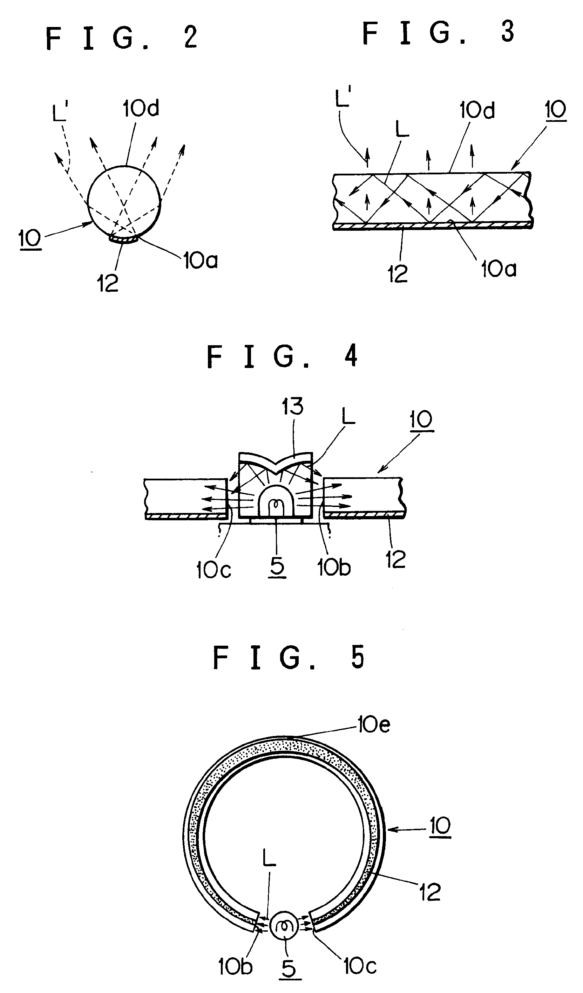

As shown in Figures 2 and 3, a reflection film 12 is formed on an overall length of the light transmitting rod 10. The reflection film 12 has a shape of strip and is formed by printing or painting white ink or paint on a boundary surface of the rod 10 opposite a surface thereof opposing the dial 1 or the liquid crystal display panel 9. The reflection film 12 introduces the light L from the illumination bulb 5 into the rod 10 from ends of the cutout portion 10b and 10c thereof so that the light L proceeds in the rod 10 while being totally reflected on a boundary surface 10d of the rod 10 and is diffused. Then, the diffused light L′ is emitted from the boundary surface 10d of the rod 10 with uniform directivity by lens effect of the rod 10. The emitted light L′ by the diffused reflection irradiates rear surface of the dial 1 or the like, which causes the dial 1 or like to perform so-called transmitting illumination.

In this embodiment, white color is the most suitable for the above reflection film 12 to perform the diffused reflection. The color of the reflection film may be changed appropriately to color the diffused light L′.

Therefore, in this embodiment, a light source for transmitting illumination comprises the circular light transmitting rod 10 disposed a portion corresponding to the letters and the graduations of the dial 1, and an illumination bulb 5 disposed at the cutout portion 11 of the light transmitting rod 10, which provides bright and uniform display with considerably decreased price and simple structure. Further, since no expensive elements are used for the device such as an inverter and a cold cathode-ray tube which are used for a conventional illuminating device and may generate noise, the problem of noise generation does not occur and the price of the whole device can be decreased.

Further, the lens effect of the light transmitting rod 10 decreases the width of the reflection film 12 which is formed on the boundary surface 10a of the rod 10 to obtain the diffused light L′ with a predetermined directivity. As a result, the amount of the diffused light by the reflection film 12 can be restricted to prevent the light L proceeding in the rod 10 from being attenuated.

Figure 4 shows an illuminating device according to another embodiment of the present invention. In this embodiment, a reflection plate 13 as a first reflection element is mounted at both sides of the illumination bulb 5 disposed at the cutout portions 11 of the light transmitting rod 10. The reflection plate 13 extends in the direction of circumference of the rod 10 and is formed so that the upper end thereof covers the upper portion of the bulb 5.

The light L emitted over the bulb 5 is reflected by the reflection plate 13 so as to be introduced to the rod 10 from the cutout portions 10b and 10c without loss in quantity of the emitted light from the bulb 5, permitting the light L being introduced to the rod 10 to be increased to obtain brighter illumination.

Figure 5 also shows the illuminating device for an instrument of a vehicle according to another embodiment of the present invention. In the figure, the reflection film 12 of the light transmitting rod 10 is formed so that the width thereof increases as it becomes far from the illumination bulb 5, that is, as it becomes far from the cutout portions 10b and 10c of the rod 10. The width of the reflection film 12 is the widest at a portion 10e of the circular portion opposite to the bulb 5 to obtain largest reflection area at the portion.

In an illuminating device for an instrument of a vehicle according to the present invention, even when the light L from the bulb 5 which is introduced into ends of the cutouts of the rod 10 to proceed in the rod 10 is diffused by the reflection film 12 to be emitted from the rod 10 so that the light is gradually attenuated as the light proceeds, the width of the reflection film 12 is formed in such a manner as to become wider in proportion to the attenuation of the light, permitting the attenuated light to be adequately diffused at wider portion of the reflection film 12. As a result, the light transmitting rod 10 is to be uniformly illuminated throughout total length of the rod, resulting in uniform illumination light.

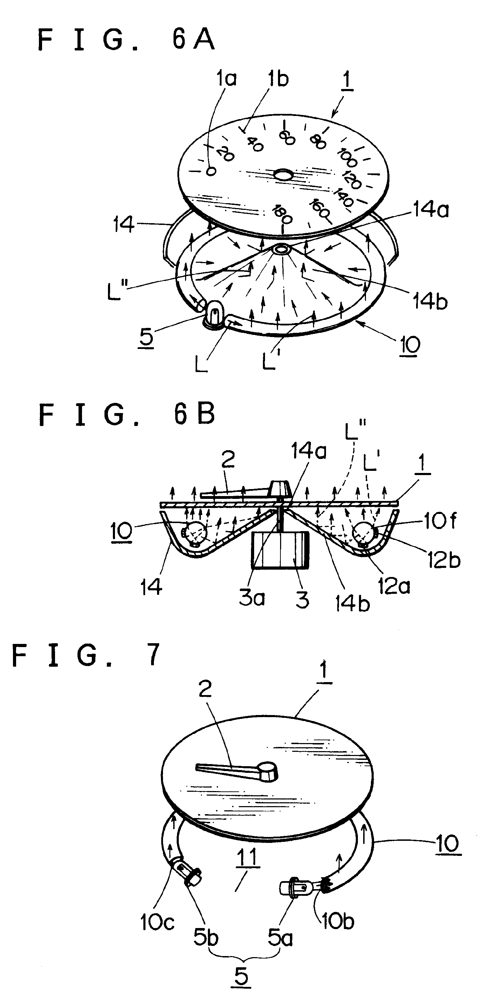

Figures 6A and 6B also show the illuminating device according to another embodiment of the present invention. In the figure, a reflection plate 14 is disposed at lower surface side of the light transmitting rod 10 to cover throughout a rod 10 from behind. The plate 14 has a shape of a ring with substantially U-shaped cross section. A pointer shaft 3a of a mechanism 3 projects from a center hole 14a of the reflection plate 14 so as to penetrate a dial 1. Then, reflection film 12a is formed on an outer boundary surface 10f of the rod 10 with a predetermined width as well as on a boundary surface 10a of the rod 10 opposite a surface thereof opposing the dial 1.

In the illuminating device for an instrument of a vehicle according to the present invention, by virtue of the reflection plate 14 and the reflection film 12b, not only light L, which is diffused by the reflection film 12a of the rod 10, emits toward the dial 1 side with a predetermined directivity but also light L" diffused by the reflection plate 12b emits toward an inner reflection surface 14b of the reflection surface to permit the light L˝ to further reflect on the reflection surface 14b and to be emitted toward the dial 1. As a result, the light source works as a surface illumination which is able to perform transmitting illumination to brighten overall area of the dial 1 and light transmits overall area of the dial 1 as well as letters 1a and graduations 1b.

Figures 7 and 8 shows an illuminating device for an instrument of a vehicle according to another embodiment of the present invention. In the figure, at the cutout portion of the light transmitting rod 10 are disposed two illuminating bulbs in such a manner as to be directed to ends 10b and 10c of the cutouts of the rod 10 respectively. Further, for example, one of the bulbs 5a and 5b may be covered by an orange-colored cap and a green cap.

In this embodiment, in order to mount the bulbs 5a and 5b at a predetermined position, the case 4 is formed so as to have a concave portion where the two bulbs are positioned at the cutout portion 11 and the bulbs each may be placed on a portion of the concave portion 4b opposing the ends 10b and 10c of the cutouts. A portion of a flexible printed circuit 15 disposed on the rear face of the case 4 is folded so as to be connected to the bulbs 5a and 5b to supply power to the bulbs.

In this embodiment, for example, when illumination light of orange color is desired, the bulb 5a with orange-colored cap is switched on so that illumination light of orange color introduced into the rod 10 to obtain uniform orange-colored illumination light. On the other hand, when green illumination light is desired, the other bulb 5b is switched on. With illumination light of these different colors, an interesting design of a vehicle instrument may be obtained.

## Claims

1. An illuminating device for an instrument of a vehicle comprising:
a circular light transmitting rod (10) disposed behind a display portion (1) at a position according to said display portion (1), a longitudinal portion of said circular light transmitting rod (10) being cut out to form a cutout portion (11), said circular light transmitting rod (10) having a reflecting portion (12); and
at least one bulb (5) disposed at said cutout portion (11), whereby light (L, L′) from said at least one bulb (5) illuminates said display portion (1),
**characterized in that**
said reflecting portion (12) is constructed in the shape of a strip formed on a boundary surface of said circular light transmitting rod (10) opposite an opposite surface (10d) of said circular light transmitting rod (10) opposing said display portion (1); and
light (L) from said at least one bulb (5) proceeds in the circular light transmitting rod (10) while being totally reflected by said opposite surface (10d) of the circular light transmitting rod (10) to become diffused light (L′) and the diffused light (L′) is emitted from said opposite surface (10d) of the circular light transmitting rod (10) with uniform directivity by lens effect of the rod (10).

2. An illuminating device as claimed in claim 1,
**characterized in that**
a first reflecting element (13) is provided for introducing light (L) from said bulb (5) into said circular light transmitting rod (10).

3. An illuminating device as claimed in claim 1 or 2,
**characterized in that**
said reflecting portion (12) becomes wider as the distance to said cutout portion (11) increases.

4. An illuminating device as claimed in claim 1, 2 or 3,
**characterized in that**
a second reflecting element (14) is disposed behind said circular light transmitting rod (10) to reflect light (L′, L˝) emitted from said rod (10) toward the display portion (1) side.

5. An illuminating device as claimed in any of claims 1 to 4,
**characterized in that**
said at least one illumination bulb (5) includes a plurality of bulbs (5a, 5b) emitting light of different colours.

## Patentansprüche

1. Beleuchtungseinrichtung für ein Fahrzeuginstrument mit:
einer kreisförmigen, lichtübertragenden Stange (10), die hinter einem Anzeigeteil (1) an einer dem Anzeigeteil entsprechenden Stelle angeordnet ist, wobei ein Längsteil der kreisförmigen, lichtübertragenden Stange (10) ausgeschnitten ist, um einen Ausschnitteil (11) zu bilden, und wobei die kreisförmige, lichtübertragende Stange (10) einen reflektierenden Teil (12) hat, und
mindestens einer Lampe (5), die am Ausschnitteil (11) angeordnet ist, wodurch Licht (L, L′) von der mindestens einen Lampe (5) den Anzeigeteil (1) beleuchtet,
**dadurch gekennzeichnet,** daß
der reflektierende Teil (12) in der Form eines Streifens konstruiert ist, der an einer Grenzfläche der kreisförmigen, lichtübertragenden Stange (10) gegenüberliegend zu einer gegenüberliegenden Fläche (10d) der kreisförmigen, lichtübertragenden Stange (10), die dem Anzeigeteil (1) gegenüberliegt, gebildet ist, und
Licht (L) von der mindestens einen Lampe (5) sich in der kreisförmigen, lichtübertragenden Stange (10) fortpflanzt, während es von der gegenüberliegenden Fläche (10d) der kreisförmigen, lichtübertragenden Stange (10) total reflektiert wird, damit es diffuses Licht (L′) wird und das diffuse Licht (L′) von der gegenüberliegenden Fläche (10d) der kreisförmigen, lichtübertragenden Stange (10) mit gleichförmiger Richtwirkung durch den Linseneffekt der Stange (10) emittiert wird.

2. Beleuchtungseinrichtung nach Anspruch 1, **dadurch gekenn****zeichnet,** daß ein erstes reflektierendes Element (13) zum Einführen von Licht (L) von der Lampe (5) in die kreisförmige, lichtübertragende Stange (10) vorgesehen ist.

3. Beleuchtungseinrichtung nach Anspruch 1 oder 2, **dadurch ge****kennzeichnet,** daß der reflektierende Teil (12) breiter wird, wenn die Entfernung des Ausschnitteils (11) wächst.

4. Beleuchtungseinrichtung nach Anspruch 1, 2 oder 3, **dadurch** **gekennzeichnet,** daß ein zweites reflektierendes Element (14) hinter der kreisförmigen, lichtübertragenden Stange (10) angeordnet ist, um das von der Stange (10) emittierte Licht (L′, L˝) zur Seite des Anzeigeteils (1) hin zu reflektieren.

5. Beleuchtungseinrichtung nach einem der Ansprüche 1 bis 4, **dadurch gekennzeichnet,** daß die mindestens eine Beleuchtungslampe (5) mehrere Lampen (5a, 5b) umfaßt, die Licht unterschiedlicher Farben emittieren.

## Revendications

1. Dispositif d'éclairage pour instrument de véhicule comprenant :
un guide circulaire d'émission de lumière ( 10) disposé à l'arrière d'une zone d'affichage (1) au niveau d'une position en conformité avec ladite zone d'affichage (1), une partie longitudinale dudit guide circulaire d'émission de lumière (10) étant coupée pour former une zone de coupure (11), ledit guide circulaire d'émission de lumière (10) comportant une zone réfléchissante (12) ; et
au moins une ampoule (5) disposée au niveau de ladite zone de coupure (11), de façon que la lumière (L, L′) venant de ladite ampoule, (5) éclaire ladite zone d'affichage (1),
caractérisé en ce que
ladite zone réfléchissante (12) est construite sous la forme d'une bande formée sur une surface limite dudit guide circulaire d'émission de lumière (10) opposée à une surface opposée (10d) dudit guide circulaire d'émission de lumière (10) faisant face à ladite zone d'affichage (1); et
une lumière (L) venant de ladite ampoule (5) se propage dans le guide circulaire d'émission de lumière (10) tout en étant totalement réfléchie par ladite surface opposée (10d) du guide circulaire d'émission de lumière (10) pour devenir une lumière diffusée (L′) et la lumière diffusée (L′) est émise à partir de ladite surface opposée (10d) du guide circulaire d'émission de lumière (10) en ayant une directivité uniforme par l'effet de lentille du guide (10).

2. Dispositif d'éclairage selon la revendication 1,
caractérisé en ce que
un premier élément réfléchissant (13) est prévu pour introduire la lumière (L) venant de ladite ampoule (5) dans ledit guide circulaire d'émission de lumière (10).

3. Dispositif d'éclairage selon la revendication 1 ou 2,
caractérisé en ce que
ladite zone réfléchissante (12) s'élargit lorsque la distance à ladite zone de coupure (11) augmente.

4. Dispositif d'éclairage selon la revendication 1, 2 ou 3,
caractérisé en ce que
un second élément réfléchissant (14) est disposé derrière ledit guide circulaire d'émission de lumière (10) pour réfléchir la lumière (L′, L˝) émise à partir dudit guide (10) vers le côté de la zone d'affichage (1).

5. Dispositif d'éclairage selon l'une quelconque des revendications 1 à 4,
caractérisé en ce que
ladite ampoule d'éclairage (5) comprend une pluralité d'ampoules (5a, 5b) émettant de la lumière de différentes couleurs.
